# EUROPEAN PATENT APPLICATION

(11) **EP 1 004 979 A1**
(43) Date of publication of application: **31.05.2000**
(21) Application number: 98402929.8
(22) Date of filing: 24.11.1998
(51) Int. Cl.: G06K 19/067

(54) **Portable electronic card**

(71) Applicant: CANAL+ Société Anonyme, 75711 Paris Cedex 15 (FR)
(72) Inventor: Bastien, Jean-Paul, 91720 Maisse (FR)
(74) Representative: Cozens, Paul Dennis

(57) **Abstract**

A portable electronic card (200) for a receiver/decoder comprises:
a first electrical contact arrangement (210) for making electrical contact with the receiver/decoder to enable data stored on the portable electronic card to be accessed by the receiver/decoder;
a formation (216) for receiving a second portable electronic card (208); and
a second electrical contact arrangement (206) for making electrical contact with a received portable electronic card to enable data stored on the received portable electronic card to be accessed by the receiver/decoder.

## Description

The present invention relates to a portable electronic card, such as a PC card.

Broadcast transmission of digital data is well-known in the field of pay TV systems, where scrambled audiovisual information is sent, usually by satellite or satellite/cable link, to a number of subscribers, each possessing a receiver/decoder capable of descrambling the transmitted program for subsequent viewing. Terrestrial digital broadcast systems are also known. Recent systems have also used the broadcast link to transmit other data, in addition to or as well as audiovisual data, such as computer programs or interactive applications to the receiver/decoder or to a connected PC.

The term "receiver/decoder" used herein may connote a receiver for receiving either encoded or non-encoded signals, for example, television and/or radio signals, which may be broadcast or transmitted by some other means. The term may also connote a decoder for decoding received signals. Embodiments of such receiver/decoders may include a decoder integral with the receiver for decoding the received signals, for example, in a "set-top box", such a decoder functioning in combination with a physically separate receiver, or such a decoder including additional functions, such as a web browser, a video recorder, or a television.

Decryption keys for encoded signals are typically carried by a portable electronic card insertable into a card reader provided in the receiver/decoder. As used herein, the term "portable electronic card" includes any chip-based card device, or object of similar function and performance, possessing, for example, microprocessor and/or memory storage. Included in this term are PC cards and "smartcards", as well as similar devices having alternative physical forms to a card, for example key-shaped devices such as are often used in TV decoder systems.

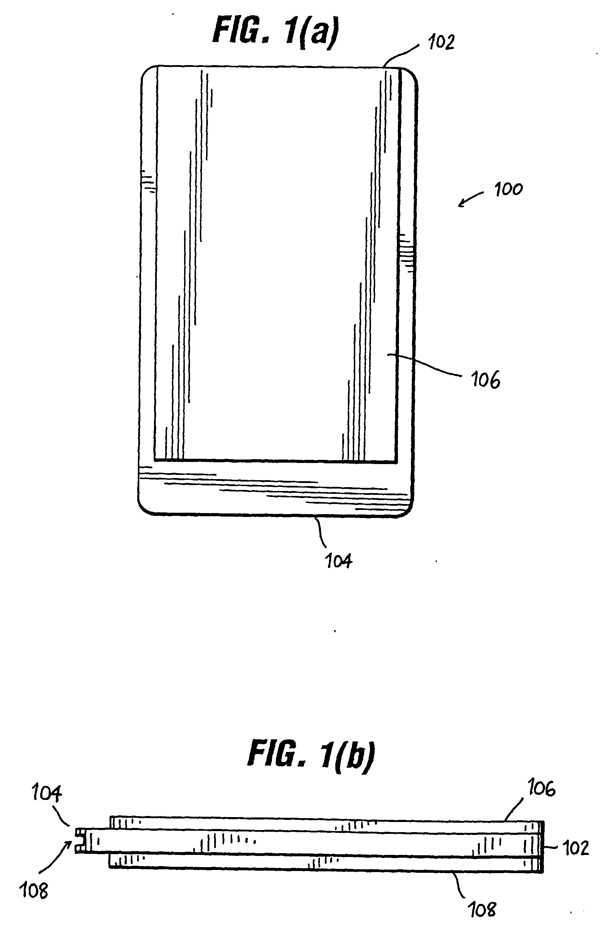

In the field of computing the use of floppy disks as a source of memory is being replaced with the use of electronic cards having a format similar to that of smartcards and typically having a much greater memory capacity than floppy disks. This type of card is commonly referred to as a "PC card". Figures 1(a) and 1(b) illustrate top and side views of a conventional PC card. The card 100 has front and rear ends 102, 104 and upper and lower surfaces 106, 108. A 68-pin female connector 110 for a card reader housed in the computer is provided at the rear end 104.

There are a number of different types of PC card. Type I PC cards are typically used for memory devices, such as RAM, Flash and SRAM cards. Type II PC cards are typically used for I/O devices, such as data/fax modems, LANs and mass storage devices. Type III PC cards are used for devices whose components are thicker, such as rotating mass storage devices. The physical specifications of various types of PC card have been standardised by the Personal Computer Electronic card International Association (PCMCIA), 1030B East Duane Avenue, Sunnyvale, California by means of the PC Card Standard. All three card types have the same length (85mm) and width (54mm) and use the same type of female connector. The thickness of the Type I, Type II and Type III cards are 3.3mm, 5.0mm and 10.5mm respectively.

In one aspect, the present invention provides a portable electronic card for a receiver/decoder comprising:
a first electrical contact arrangement for making electrical contact with the receiver/decoder; and
a second electrical contact arrangement for making electrical contact with a second portable electronic card.

This can enable data stored on the first and second portable electronic cards to be accessed by the receiver/decoder.

It is preferred that the first-mentioned portable electronic card conforms to the PC Card Standard, although it may be any appropriate card, such as a processor and/or memory card.

Pursuant to the present invention, the desirability has been realised of using such portable electronic cards in a receiver/decoder. However, receiver/decoders typically have two card readers, one for a smartcard and another for a user's bank card, so that interactive applications such as home banking and home shopping may be realised. By providing a third card reader for another portable electronic card, such as a PC card, the amount of storage space for other components within the receiver/decoder would be reduced. In addition, the operator of the receiver/decoder might otherwise easily confuse the three different but externally similar card readers in the receiver/decoder.

By receiving a portable electronic card so that electrical connection is made between the two portable electronic cards, access to data stored in the second portable electronic card, for example, a smartcard or a SIM card, can be provided via the first mentioned portable electronic card, such as a PC card. Thus, two separate card readers for the PC card and for the smartcard respectively are not required in the receiver/decoder. Thus, the number of card readers in the receiver/decoder can be kept to a minimum whilst the operability of the receiver/decoder can be improved by means of the functionality provided by the PC card.

The second electrical contact arrangement may be located on one of the major faces of the card.

The portable electronic card preferably comprises a formation for receiving a second portable electronic card. The receive formation may comprise a recessed portion of the first portable electronic card. This can provide a simple structure for receiving the second portable electronic card.

The receive formation may be located between a body section and a cover for the second memory card. Thus, the receive formation may be conveniently provided by a slot formed in the portable electronic card.

The cover may extend substantially the entire length of the first portable electronic card. This can provide physical protection for any electrical components located on the surface of the body section. Hence, the second electrical contact arrangement may be located on the surface of the body section facing the cover.

Alternatively, the cover may have a width which is greater than its length (that is, it may be stubby). This can make it less liable to breakage.

The cover may be moveable relative to the body section. This can facilitate the receipt of the second portable electronic card. In one preferred arrangement, the receive formation is located on the cover, and so motion of the cover to a closed position may bring the second electrical contact arrangement into contact with the second portable electronic card. Thus, in a second aspect, the present invention provides a portable electronic card comprising a body section having a moveable cover, the cover including a formation for receiving a further portable electronic card, and an electrical contact arrangement provided on said body section for making electrical contact with the further portable electronic card so that motion of the cover to a closed position brings the electrical contact arrangement into contact with the further portable electronic card.

In a preferred embodiment of this arrangement, the cover is hinged.

The portable electronic card may further comprise means for retaining the first and second electronic cards in electrical contact. The retaining means may be provided separate from the receive formation. Thus, in a third aspect the present invention provides a portable electronic card comprising:
a formation for receiving a further portable electronic card;
an electrical contact arrangement for making electrical contact with the portable electronic card received by the receive formation; and
retaining means, separate from the receive formation, for retaining the further portable electronic card in order to maintain the electrical contact between the two electronic cards.

The retaining means may comprise a retaining wall of the portable electronic card.

Hence, the retaining means may be attached to the portable electronic card. The retaining wall may substantially surround the further portable electronic card, thereby ensuring that the further portable electronic card is enclosed by the retaining wall.

In another preferred arrangement, the retaining means comprises a detachable retaining member. This can provide a simple and convenient method of retaining the further portable electronic card. A snap-fit type connection may be provided to attach the retaining member. Therefore, in another aspect, the present invention provides a portable electronic card comprising:
a formation for receiving a further portable electronic card;
an electrical contact arrangement for making electrical contact with the further portable electronic card; and
a retaining member adapted to be releasably attached to the further portable electronic card (and preferably also to be releasably attached to the first mentioned portable electronic card) in order to retain releasably the further portable electronic card in the receive formation.

The retaining member may be adapted to be releasably attached to at least one end of the portable electronic card, such as at least one of one end of the body section and the cover. If so, the retaining member may include a recess adapted to receive at least one end of the portable electronic card.

The retaining member may include a tongue adapted to be received by said receive formation so that the further portable electronic card is sandwiched between the card and the tongue.

In a number of preferred embodiments, the portable electronic card may be adapted to receive a smartcard. Alternatively, the portable electronic card may be adapted to receive a SIM card.

The portable electronic card may comprise at least part of a descrambler unit for a receiver/decoder. In fact, the portable electronic card may comprise any one or a plurality of components of the receiver/decoder.

The present invention extends to a combination of a portable electronic card as aforementioned and a further portable electronic card. The further portable electronic card preferably stores decryption keys.

The present invention also extends to use of a portable electronic card as aforementioned with a receiver/decoder.

The present invention also provides a combination of a card reader for a receiver/decoder and a portable electronic card as aforementioned.

The present invention also provides a receiver/decoder including a card reader for a portable electronic card as aforementioned.

The present invention extends to a method of operating a receiver/decoder, the method comprising the steps of connecting a first portable electronic card to a second portable electronic card, and connecting the connected portable electronic cards to the receiver/decoder.

Features of any aspect of the invention can be applied to any other aspect.

Preferred features of the present invention will now be described by way of example with reference to the accompanying drawings, in which:
Figure 1(a) is a top view of a conventional PC card;
Figure 1(b) is a side view of the PC card shown in Figure 1(a);
Figure 2 shows the schematic outline of a digital television system;
Figure 3 shows the structure of a receiver/decoder of the system of Figure 2;
Figure 4 shows a first embodiment of a PC card;
Figure 5 shows a second embodiment of a PC card;
Figure 6 shows a third embodiment of a PC card; and
Figure 7 shows a fourth embodiment of a PC card.

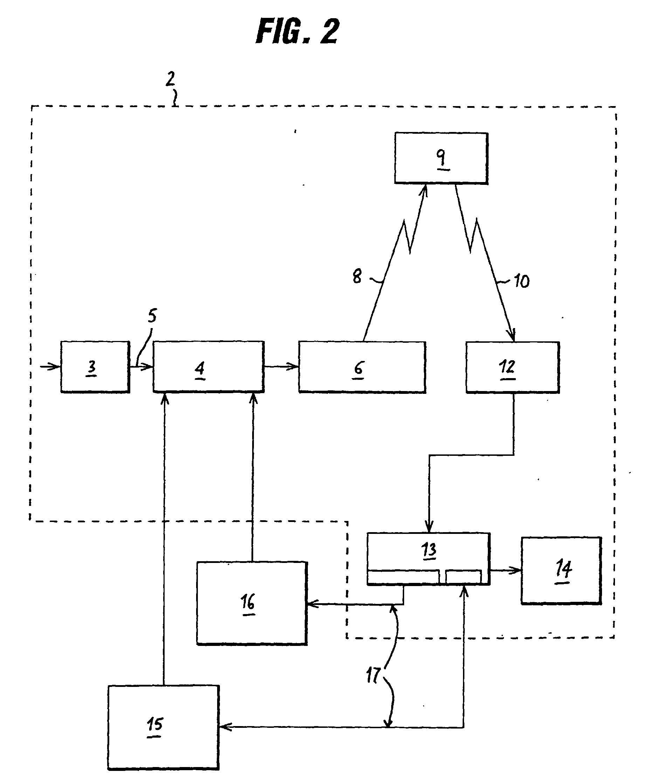

An overview of a digital television system 1 is shown in Figure 2. The system includes a mostly conventional digital television system 2 that uses the known MPEG-2 compression system to transmit compressed digital signals. In more detail, MPEG-2 compressor 3 in a broadcast centre receives a digital signal stream (typically a stream of video signals). The compressor 3 is connected to a multiplexer and scrambler 4 by linkage 5. The term MPEG refers to the data transmission standards developed by the International Standards Organisation working group "Motion Pictures Expert Group" and in particular but not exclusively the MPEG-2 standard developed for digital television applications and set out in the documents ISO 13818-1, ISO 13818-2, ISO 13818-3 and ISO 13818-4. In the context of the present patent application, the term includes all variants, modifications or developments of MPEG formats applicable to the field of digital data transmission.

The multiplexer 4 receives a plurality of further input signals, assembles the transport stream and transmits compressed digital signals to a transmitter 6 of the broadcast centre via linkage 7, which can of course take a wide variety of forms including telecommunications links. The transmitter 6 transmits electromagnetic signals via uplink 8 towards a satellite transponder 9, where they are electronically processed and broadcast via notional downlink 10 to earth receiver 12, conventionally in the form of a dish owned or rented by the end user. The signals received by receiver 12 are transmitted to an integrated receiver/decoder 13 owned or rented by the end user and connected to the end user's television set 14. The receiver/decoder 13 decodes the compressed MPEG-2 signal into a television signal for the television set 14.

Other transport channels for transmission of the data are of course possible, such as terrestrial broadcast, cable transmission, combined satellite/cable links, telephone networks etc.

In a multichannel system, the multiplexer 4 handles audio and video information received from a number of parallel sources and interacts with the transmitter 6 to broadcast the information along a corresponding number of channels. In addition to audiovisual information, messages or applications or any other sort of digital data may be introduced in some or all of these channels interlaced with the transmitted digital audio and video information. In such a case, a stream of digital data in the form, for example, of DSM-CC format software files and messages, will be compressed and packetised into the MPEG format by the compressor 3. The downloading of software modules will be described in greater detail below.

A conditional access system 15 is connected to the multiplexer 4 and the receiver/decoder 13, and is located partly in the broadcast centre and partly in the receiver/decoder. It enables the end user to access digital television broadcasts from one or more broadcast suppliers. A portable electronic card, capable of deciphering messages relating to commercial offers (that is, one or several television programmes sold by the broadcast supplier), can be inserted into the receiver/decoder 13. Using the receiver/decoder 13 and portable electronic card, the end user may purchase commercial offers in either a subscription mode or a pay-per-view mode. In practice, the receiver/decoder may be configured to handle multiple access control systems, e.g. of the Simulcrypt or Multicrypt design.

As mentioned above, programmes transmitted by the system are scrambled at the multiplexer 4, the conditions and encryption keys applied to a given transmission being determined by the access control system 15. Transmission of scrambled data in this way is well known in the field of pay TV systems. Typically, scrambled data is transmitted together with a control word for descrambling of the data, the control word itself being encrypted by a so-called exploitation key and transmitted in encrypted form. The scrambled data and encrypted control word are then received by the receiver/decoder 13 having access to an equivalent of the exploitation key stored on a portable electronic card, such as a smartcard, inserted in the receiver/decoder to decrypt the encrypted control word and thereafter descramble the transmitted data. A paid-up subscriber will receive, for example, in a broadcast monthly ECM (Entitlement Control Message) the exploitation key necessary to decrypt the encrypted control word so as to permit viewing of the transmission. In addition to their use in decrypting audiovisual television programs, similar exploitation keys may be generated and transmitted for use in the verification of other data such as software modules as will be described below.

An interactive system 16, also connected to the multiplexer 4 and the receiver/decoder 13 and again located partly in the broadcast centre and partly in the receiver/decoder, enables the end user to interact with various applications via a modem back channel 17. The modem back channel may also be used for communications used in the conditional access system 15. An interactive system may be used, for example, to enable the viewer to communicate immediately with the transmission centre to demand authorisation to watch a particular event, download an application etc.

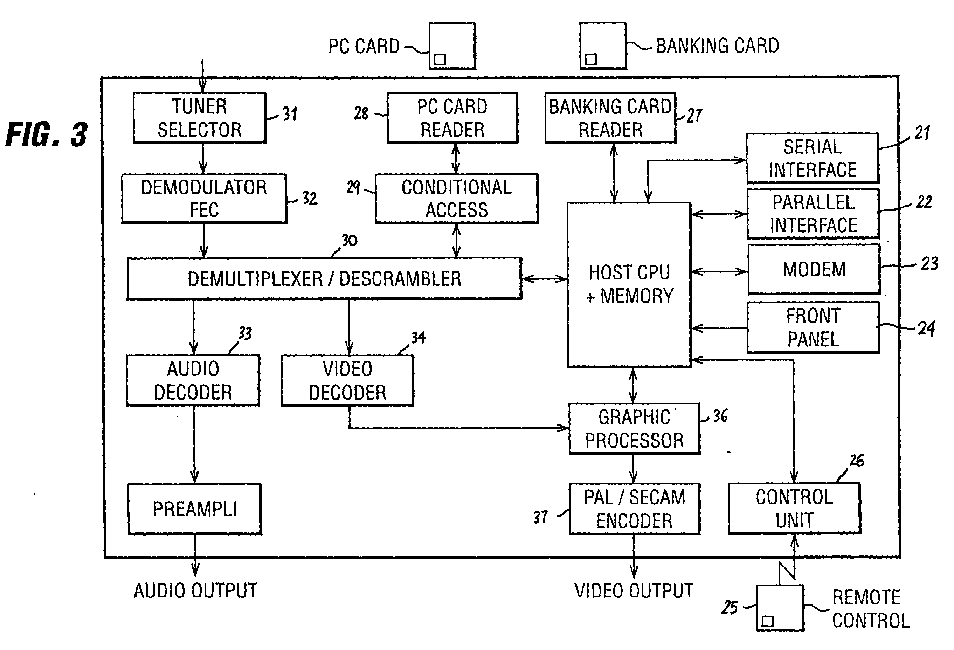

Referring to Figure 3, the physical elements of the receiver/decoder 13 will now be briefly described. The elements shown in this figure will be described in terms of functional blocks.

The receiver/decoder 13 comprises a central processor 20 including associated memory elements and adapted to receive input data from a serial interface 21, a parallel interface 22, and a modem 23 (connected to the modem back channel 17 of Fig 1).

The receiver/decoder is additionally adapted to receive inputs from an infra-red remote control 25 via a control unit 26 and from switch contacts 24 on the front panel of the receiver/decoder. The receiver/decoder also possesses two card readers 27, 28 adapted to read bank or PC cards 29, 30 respectively. Input may also be received via an infra-red keyboard (not shown). As described in more detail below, the PC card 30 is adapted to carry a portable electronic card containing an exploitation key for the transmitted data. The PC card reader 28 engages with an inserted PC card 30 and with a conditional access unit 29 to supply the necessary control word to a demultiplexer/descrambler 30 to enable the encrypted broadcast signal to be descrambled. The receiver/decoder also includes a conventional tuner 31 and demodulator 32 to receive and demodulate the satellite transmission before being filtered and demultiplexed by the unit 30.

Processing of data within the decoder is generally handled by the central processor 20. The software architecture of the central processor corresponds to a virtual machine interacting with a lower level operating system implemented in the hardware components of the decoder.

The PC card 30 may store one or more of the components of any of the aforementioned physical elements of the receiver/decoder. For example, the PC card 30 may comprise part of the demultiplexer/descrambler 30 for enabling the encrypted broadcast signal to be descrambled. By providing such components on a replaceable PC card 30, the components can be conveniently updated without having to replace the entire receiver/decoder.

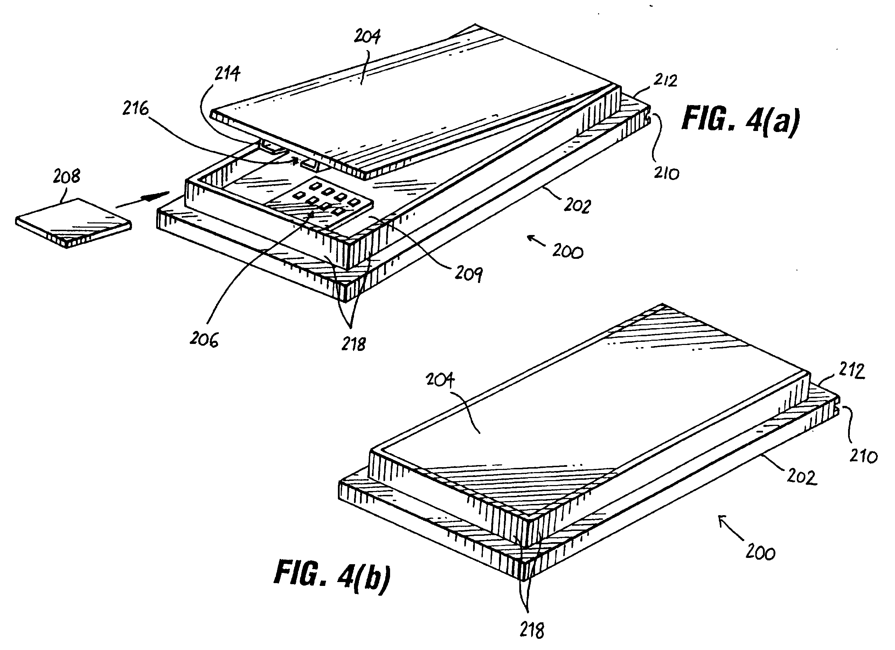

As mentioned above, the PC card caries a second portable electronic card for the conditional access system. Figure 4 illustrates a first embodiment of such a PC card, in which the second portable electronic card is fitted inside the PC card.

With reference to Figure 4(a), PC card 200 comprises a body section 202 and a cover 204, the cover 204 being hinged to the body section 202 at hinge 205. Electrical contacts 206 for electrically connecting the PC card 200 to a second portable electronic card, in this embodiment SIM card 208, are provided on the surface 209 of the body section 202 facing the cover 204. Electrical connector 210 for connecting the PC card 200 to the PC card reader 28 housed in a receiver/decoder is provided on one end 212 of the body section 202.

A slot 214 for receiving the SIM card 208 is provided on the surface of the cover 204 facing the body section 202. The slot 214 may be conveniently provided by a U-shaped bracket mounted to, or integral with, the cover 204. The slot 214 has an open face 216 for exposing a SIM card located in the slot 214 to the electrical contacts 206 provided on the body section 202.

In use, with the cover 204 in an open position as shown in Figure 4(a), a SIM card 208 is located within the slot 214. The SIM card 214 is then brought into electrical contact with the electrical contacts 206 by pivoting of the cover 204 relative to the body section 202 about hinge 205. Figure 4(b) shows the cover 204 in a closed position. A retaining means 218, such as a retaining wall or recess, mounted on, or integral with, the body section 202 retains the SIM card 208 within the slot 214 when the cover 204 is in the closed position.

The PC card 200 may then be inserted into the PC card reader 28 so that the electrical connector 210 engages a conformingly profiled electrical connector provided in the PC card reader 30.

The PC card typically houses a circuit (not shown) comprising one or a number of integrated circuits. This circuit may carry out various different functions. For example, the printed circuit may supply the received (second) card with electrical power, received from the receiver/decoder, and clock signals. The circuit may exchange data with the received card, and may process data stored on the received card and transfer the processed data to the receiver/decoder. As described above, the PC card 30 may store one or more of the components of any of the physical elements of the receiver/decoder. The circuit may comprise part of the conditional access unit 29 which extracts the exploitation key from the received portable electronic card and supplies the control word, in an encrypted or decrypted form, to a demultiplexer/descrambler 30 in the receiver/decoder to enable the encrypted broadcast signal to be descrambled. Alternatively, or additionally, the circuit may comprise part of the demultiplexer/descrambler 30. The circuit may also store an interactive application, such as a pay-per-view (PPV) application or an electronic programming guide (EPG) application which accesses data stored on the smartcard.

Any suitable mechanism may be provided releasably to lock the cover 204 in the closed position. For example the front end 220 of the cover may be provided with a releasable catch which engages with the body portion 202 to lock the cover in the closed position. The catch may be released to enable the cover 204 to be moved from the closed position so that the SIM card 208 can be replaced.

As shown in Figure 4(a), the hinge is provided towards one end of the body section, the SIM card being inserted into a slot provided a the end of the cover remote from the hinge. In an alternative arrangement, the PC card is hinged laterally in half, the SIM card being insertable into a slot provided in one half of the hinged wall of the PC card. Opening the PC card fully so that the two halves of the hinged wall meet can retain the smartcard in the slot.

In the above arrangements, the cover 204 is moveable relative to the body section 202. The hinge mechanism of the PC card 200 may be replaced by any other suitable mechanism for enabling relative motion of the body section and the cover. For example, the cover 204 may be slidable on runners or the like provided on the side walls of the retaining wall 218. Alternatively, instead of being pivotable about an axis which is substantially parallel to the plane of the body section 202, the cover 204 may be pivotable about an axis which is substantially perpendicular to the plane of the body section. In this case, one of the side walls of the retaining wall 218 may be removed in order to allow the cover 204 to swing to the closed position shown in Figure 4(b).

In alternative arrangements, the cover may be dispensed with, and the SIM card inserted in a recess formed on one of the major surfaces of the PC card. In another arrangement, the SIM card may be received in a slidable drawer provided in the PC card 200. The SIM card may also be connected into a special connector located on one of the side walls or end wall of the PC card 200.

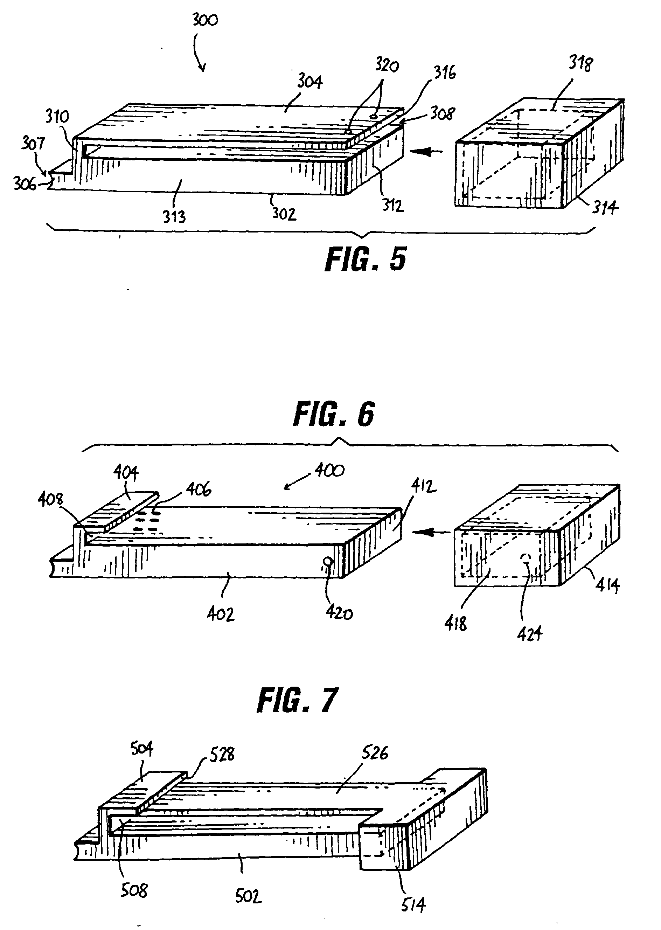

The arrangements described above are particularly suitable for portable electronic cards, such as SIM cards, which are smaller than the PC card. Figure 5 shows a second embodiment of a PC card adapted to carry a second portable electronic card, such as a smartcard, having substantially the same width as the PC card.

With reference to Figure 5, the PC card 300 comprises a body section 302 and a cover 304 mounted on, or integral with, the body section 302. Electrical connector 306 for connecting the PC card 300 to a card reader housed in a receiver/decoder are provided on one end 307 of the body section 302. Electrical contacts (not shown) for electrically connecting the PC card 300 to a smartcard are provided on the surface of the body section 302 facing the cover 304.

The body section 302 and cover 304 together define a slot 308 in which a smartcard is releasably locatable. The slot 308 has substantially the same dimensions as a smartcard, so that when a smartcard is fully inserted such that one end of the smartcard abuts wall 310 of the PC card, the opposite end of the smartcard is substantially flush with end 312 of the body section 302 and the smartcard is in electrical contact with the electrical contacts provided on the body section.

As shown in Figure 5, the cover 304 is connected to the end wall 310 of the PC card. However, the cover may additionally, or alternatively, be connected to one or both of the side walls 313 of the body section 302.

In order to retain the smartcard located in the slot 308, thereby maintaining the electrical contact between the smartcard and the PC card 300, a resilient retaining block 314 is placed over the distal end 312 of the body portion 302 and the adjacent end 316 of the cover 304. This effectively seals the mouth of the slot 308 and prevents the smartcard from moving relative to the PC card 300.

The retaining block 314 may take any suitable form for retaining the smartcard located in the block. In the embodiment shown in Figure 5, the block is provided with a profiled mouth 318 adapted to fit over the ends 312, 316 of the body section 302 and cover 304. Projections 320 provided on, for example, the cover 304 of the PC card and corresponding recesses (not shown) provided in the mouth 318 of the block 314 provide for a snap-fit type connection of the block 314 to the PC card 300. The mouth 318 of the block 314 may be shaped so that when the block 314 is placed over the ends 312, 316 of the body section 302 and cover 304, the end 316 of the cover 304 is urged by the block 314 towards the end 312 of the body section 302 so that the smartcard is gripped by the body section 302 and the cover 304. Any sideways movement of the smartcard relative to the PC card 300 is prevented by the side walls of the mouth of the block 314.

In the embodiment shown in Figure 5, the retaining block 314 is separate from both the body section and cover of the PC card. However, the block 314 may be attached to one or both of the body section and cover. For example, the block 314 may be hinged to either the body section or cover. Alternatively, the block may be slidably mounted on the body section, for example, by means of runners provided on the side walls of the body section.

In the arrangement shown in Figure 5, the slot has substantially the same width as the smartcard to be located therein. However, it is not essential for the slot to take substantially the same dimensions as the smartcard. Figure 6 shows a PC card 400, similar to that shown in Figure 5, in which the cover 404 has been shortened with respect to the cover 304 shown in Figure 5, thereby exposing the electrical contacts 406 for making electrical contact with a smartcard provided on the surface of the body portion 402. A retainer block 414 similar to the retainer block 314 described above is used to retain a smartcard inserted in the slot 408 in electrical contact with the electrical contacts 406. In this example, the mouth 418 of the retainer block 414 is adapted to fit over the end 412 of the body section 402. Projections 420 are provided on the side walls of the body section 402 of the PC card 400 for a snap-fit type connection with corresponding recesses 424 provided in the mouth 418 of the block 414. The mouth 418 of the block 414 may be shaped so that when the block 414 is placed over the end 412 of the body section 402, the smartcard is gripped between the roof of the mouth 418 and the body section 402.

An alternative shape for the retainer block for the PC card shown in Figure 6 is illustrated in Figure 7. In this example, the retainer block 514 is provided with a tongue 526 adapted to be received within the slot 508 so that a smartcard, or SIM card, inserted in the slot 508 is gripped between the tongue 526 and the body portion 502. Alternatively, the end of the tongue 526 may engage the end 528 of the cover 504.

In the above arrangements, the smartcard is inserted so as to be substantially flush with the face of the body section of the PC card, so that electrical connection between the PC card and smartcard is made. It is not essential for the end of the smartcard to be substantially flush with the front end of the body section when the smartcard is so inserted; for example, the end of the smartcard may stand proud of the end 312 of the body portion 302. In such arrangements, the smartcard may be inserted into a special connector provided on the side or end wall of the PC card. The cover 304 may also be fully removed.

In any of the aforementioned embodiments, the PC card is not limited to any particular type of PC card, although Type II and Type III PC cards are more readily envisaged.

It will be understood that the present invention has been described above purely by way of example, and modifications of detail can be made within the scope of the invention.

Each feature disclosed in the description, and (where appropriate) the claims and drawings may be provided independently or in any appropriate combination.

## Claims

1. A portable electronic card for a receiver/decoder comprising:
a first electrical contact arrangement for making electrical contact with the receiver/decoder; and
a second electrical contact arrangement for making electrical contact with a second portable electronic card.

2. A portable electronic card according to Claim 1, wherein the second electrical contact arrangement is located on one of the major faces of the card.

3. A portable electronic card according to Claim 1 or 2, further comprising a formation for receiving the second portable electronic card.

4. A portable electronic card according to Claim 3, wherein the receive formation comprises a recessed portion of the first portable electronic card.

5. A portable electronic card according to Claim 3 or 4, wherein the receive formation is located between a body section of the first card and a cover for the second card.

6. A portable electronic card according to Claim 5, wherein the cover extends substantially the entire length of the first portable electronic card.

7. A portable electronic card according to Claim 5, wherein the cover has a width which is greater than its length.

8. A portable electronic card according to any of Claims 5 to 7, wherein the second electrical contact arrangement is located on the surface of the body section facing the cover.

9. A portable electronic card according to any of Claims 5 to 8, wherein the cover is moveable relative to the body section.

10. A portable electronic card according to Claim 9, wherein the receive formation is located on the cover.

11. A portable electronic card according to Claim 10, wherein motion of the cover to a closed position brings the second electrical contact arrangement into contact with the second portable electronic card.

12. A portable electronic card according to any of Claims 5 to 11, wherein the cover is hinged.

13. A portable electronic card according to any preceding claim, further comprising means for retaining the first and second electronic cards in electrical contact.

14. A portable electronic card according to Claim 13, wherein the retaining means is separate from the receive formation.

15. A portable electronic card according to Claim 13 or 14, wherein the retaining means comprises a retaining wall on the portable electronic card.

16. A portable electronic card according to Claim 15, wherein the retaining wall substantially surrounds the second portable electronic card.

17. A portable electronic card according to Claim 13, wherein the retaining means comprises a detachable retaining member.

18. A portable electronic card according to Claim 17, wherein the detachable retaining member is adapted to be releasably attached to at least one end of the first portable electronic card.

19. A portable electronic card according to Claim 18, wherein the detachable retaining member includes a recess adapted to receive said one end of the portable memory card.

20. A portable electronic card according to Claim 18 or 19, wherein the detachable retaining member includes a tongue adapted to be received by said receive formation so that the second portable electronic card is sandwiched between the first portable electronic and the tongue.

21. A portable electronic card according to any of Claims 1 to 6 and 8 to 16, comprising a PC card, the second portable electronic card comprising a SIM card.

22. A portable electronic card according to any of Claims 1 to 3, 5 to 8, 13, 14 and 17 to 20, comprising a PC card, the second portable electronic card comprising a smartcard.

23. A portable electronic card comprising:
a body section having a moveable cover, the cover including a receive formation for receiving a further portable electronic card; and
an electrical contact arrangement provided on said body section for making electrical contact with the further portable electronic card so that motion of the cover to a closed position brings the electrical contact arrangement into contact with the further portable electronic card.

24. A portable electronic card comprising:
a receive formation for receiving a further portable electronic card;
an electrical contact arrangement for making electrical contact with the further portable electronic card; and
retaining means, separate from the receive formation, for retaining the further portable electronic card in order to maintain the electrical contact between the two electronic cards.

25. A portable electronic card comprising:
a receive formation for receiving a further portable electronic card;
an electrical contact arrangement for making electrical contact with the further portable electronic card; and
a retaining member adapted to be releasably attached to the further portable electronic card in order to retain releasably the further portable electronic card in the receive formation.

26. A portable electronic card according to any of Claims 23 to 25 for a receiver/decoder and comprising a second electrical contact arrangement for making electrical contact with the further portable electronic card to enable data stored on the further portable electronic card to be accessed by the receiver/decoder.

27. A portable electronic card according to any of Claims 1 to 22 and 26, comprising at least part of a descrambler unit for a receiver/decoder.

28. A combination of a portable electronic card according to any preceding claim and a further portable electronic card.

29. A combination according to Claim 28, wherein the further portable electronic card stores decryption keys.

30. Use of a portable electronic card according to any of Claims 1 to 22, 26 and 27 with a receiver/decoder.

31. A combination of a card reader for a receiver/decoder and a portable electronic card according to any of Claims 1 to 22, 26 and 27.

32. A receiver/decoder including a card reader for a portable electronic card according to any of Claims 1 to 22, 26 and 27.

33. A method of operating a receiver/decoder, said method comprising the steps of connecting a first potable electronic card to a second portable electronic card, and connecting the connected portable electronic cards to the receiver/decoder.
